# EUROPEAN PATENT APPLICATION

(11) **EP 3 367 295 A1**
(43) Date of publication of application: **29.08.2018**
(21) Application number: 17157907.1
(22) Date of filing: 24.02.2017
(51) Int. Cl.: G06K 9/00

(54) **A TECHNIQUE FOR DETECTING A 3D MODEL OF AN OBJECT IN A 3D SCAN**

(71) Applicant: Siemens Aktiengesellschaft, 80333 München (DE)
(72) Inventor: Johnson, Rebecca, 81825 München (DE)

(57) **Abstract**

For detecting a 3D model of an object in a 3D scan, the model is sliced into 2D slices. Each slice is converted into an array of points. A test slice is selected from the slices. The 3D scan is also sliced into 2D slices. Each slice is converted into an array of points. The array of the test slice is compared to the arrays of each slice of the 3D scan, by array-in-array search. Consequently, a match slice is selected from the slices of the 3D scan. Thereafter, a slice adjacent to the test slice is selected from the 2D slices of the model. The array of the adjacent slice is compared to the array of points of a slice neighbouring the match slice, by array-in-array search. The 3D model is determined as detected if the array of the adjacent slice finds a match in the neighbouring slice.

## Description

The present invention relates to 3D object recognition techniques, and more particularly to techniques for detecting a 3D model of an object in a larger 3D scan suspected to include the model of the object.

A very useful application of object recognition techniques is to detect or identify an object, technically a 3D model of the object, in a larger scan or larger 3D model. For example, an application or a user may desire to locate a 3D model of the object, for example a chair, a machine wheel, a drum of solvent, etc in a large scale laser scan for example in a 3D scan of a room wherein the chair is suspected to be present, a 3D scan of a factory wherein the machine wheel is suspected to be present, a 3D scan of the storage facility wherein the drum of solvent is suspected to be present.

Currently, factories, manufacturing facilities, storage facilities, real estate setups, and likes can be scanned with laser scanners or cameras (photogrammetry) resulting in a point cloud format. This raw format, i.e. the point cloud, is of great value in factory, storage facility or room planning, etc. if a model, such as a CAD model, of a specific machinery, a certain stored article, or a furniture of interest, etc. can be automatically detected or identified in the scans of the factory, the storage facility or the room. The automatic detection provides location knowledge of the object of interest which may further help in quicker retrieval of or access to the object of interest, for example in a large storage facility or a large factory. The uses of automatic detection, i.e. identification, of the 3D model of the object in the 3D scan of area or facility suspected of containing the object are manifold.

Presently known object recognition algorithms rely on matching, learning, or pattern recognition algorithms using appearance-based or feature-based techniques. For example, out of the two pervasively used methods known for detecting CAD models of an object in larger scans one uses point pair features matching i.e. recording the distances of the individual point pairs in the CAD model and searching for the same 'point relationships' in the scan, whereas the other method involves rendering 2D images of the 3D model from different angles and using popular 2D detection algorithms on depth map images of the scan. The aforementioned graphical or machine learning solutions presently used to detect or identify a 3D model such as a CAD model of the object in a larger scan or larger 3D model are computationally intensive and complicated. Therefore there exists a need for a technique for detecting or identifying an object, technically a 3D model of the object, in a larger scan or larger 3D model that is less complicated and computationally simpler.

An object of the present invention is to provide a technique for detecting or identifying an object, technically a 3D model of the object, in a larger scan or larger 3D model that is less complicated and computationally simpler.

The above object is achieved by a method for detecting a 3D model of an object in a three dimensional scan according to claim 1 of the present technique, a system for detecting a 3D model of an object in a three dimensional scan according to claim 12 of the present technique, a computer-readable storage media according to claim 14 of the present technique, and a computer program according to claim 15 of the present technique. Advantageous embodiments of the present technique are provided in dependent claims.

In a first aspect of the present technique a method for detecting a 3D model of an object in a three dimensional scan is presented. The three dimensional scan, hereinafter also referred to as the 3D scan, is suspected to include the 3D model of the object. In the method, the 3D model of the object is sliced into a plurality of two dimensional slices, and thereafter each of the slices of the model of the object is converted into an array of points. Furthermore, a test slice is selected from the plurality of two dimensional slices of the model of the object. Simultaneously or subsequently or antecedently with the aforementioned steps of the method, the three dimensional scan, suspected of including the 3D model of the object, is sliced into a plurality of two dimensional slices and thereafter each of the slices of three dimensional scan is converted into an array of points. Thereafter in the method, at least a part of the array of points of the test slice is compared to the two dimensional arrays of points of each of the slices of the three dimensional scan, by performing an array-in-array search. Subsequently, a match slice is selected from the slices of the three dimensional scan. The match slice is selected based on a match for the part of the array of points, so compared, of the test slice within the array of points of one of the slices of the three dimensional scan.

In the method of the present technique, and following the aforementioned steps, an adjacent slice, with respect to the test slice, is selected from the plurality of two dimensional slices of the model of the object. Then, at least a part of the array of points of the adjacent slice is compared to the array of points of a neighbouring slice, with respect to the match slice, of the three dimensional scan. The comparing is performed by another array-in-array search. In the method of the present technique, the model of the object is determined as detected or identified in the three dimensional scan if a match for the part of the array of points of the adjacent slice, so compared, is established in the neighbouring slice of the three dimensional scan.

The method of the present technique does not involve computationally rigorous pattern matching or point pair features based object detection, but instead in the method of the present technique the object recognition or detection is performed by searching for and matching array of points, derived from the 3D model of the object, within a larger array of points, derived from the three dimensional scan suspected to include the 3D model of the object. Since the array-in-array search provides a mathematical, i.e. arithmetical, solution as opposed to the conventionally known and aforementioned graphical solution or machine learning solution, the method of the present technique is less complicated and computationally simpler.

In an embodiment of the method, the part of the array of points of the test slice is a two dimensional array, and in a related embodiment of the method, the part of the array of points of the test slice includes all points of the array of points of the test slice. This presents a simple way of implementing the method of the present technique.

In another embodiment of the method, the part of the array of points of the test slice is a one dimensional array. Since the array-in-array search performed in the present technique now involves a one dimensional array search, the present technique is even simpler and computationally less intensive as compared to a two dimensional array search.

In another embodiment of the method, the test slice is selected based on a number of points in the corresponding arrays of the two dimensional slices of the model of the object. Thus in the method the test slice is selected based on a desired or an optimal number of points that are deemed to be suitable for a positive match and to obviate chances of false positive matches when the array-in-array search of the method is performed.

In another embodiment of the method, the test slice is selected based on a distribution of points in the corresponding arrays of the two dimensional slices of the model of the object. Thus in the method the test slice is selected based on an interesting or a distinctive feature of the object, i.e. based on the distribution of points resulting from the interesting or the distinctive feature of the object, that are deemed to be suitable for a positive match and to obviate chances of false positive matches when the array-in-array search of the method is performed.

In another embodiment of the method, the model of the object is one of a laser scan and a photogrammetric scan. In another embodiment of the method, the model of the object is a CAD model. In yet another embodiment of the method, three dimensional scan is one of a laser scan and a photogrammetric scan. These provide simple ways of implementing the present technique as such scans, i.e. laser and photogrammetric, and CAD models are easy to construct or obtain.

In another embodiment of the method, the method includes acquiring the 3D model of the object. In yet another embodiment of the method, the method includes acquiring the three dimensional scan suspected to include the model of the object.

In a second aspect of the present technique a system is presented for detecting a 3D model of an object in a three dimensional scan suspected to include the model of the object. The system includes a scanning device and a processor. The scanning device provides the three dimensional scan suspected to include the model of the object and/or provides the 3D model of the object to be detected. The processor:
- slices the model of the object into a plurality of two dimensional slices;
- converts each of the slices of the model of the object into an array of points;
- slices the three dimensional scan into a plurality of two dimensional slices;
- converts each of the slices of the three dimensional scan into an array of points;
- selects a test slice from the plurality of two dimensional slices of the model of the object;
- compares at least a part of the array of points of the test slice to the two dimensional arrays of points of each of the slices of the three dimensional scan, by an array-in-array search;
- selects a match slice from the slices of the three dimensional scan, wherein the match slice is selected based on a match for the part of the array of points, so compared, of the test slice within the array of points of one of the slices of the three dimensional scan;
- selects an adjacent slice, with respect to the test slice, from the plurality of two dimensional slices of the model of the object;
- compares at least a part of the array of points of the adjacent slice to the array of points of an neighbouring slice, with respect to the match slice, of the three dimensional scan, by an array-in-array search; and
- determines the model of the object as detected in the three dimensional scan if a match for the part of the array of points of the adjacent slice, so compared, is established in the neighbouring slice of the three dimensional scan.

The system of the present technique has same advantages as aforementioned with respect to the first aspect of the present technique.

In an embodiment of the system, the processor further selects the test slice based on a number of points in the corresponding arrays of the two dimensional slices of the model of the object and/or a distribution of points in the corresponding arrays of the two dimensional slices of the model of the object.

In a third aspect of the present technique a computer-readable storage media is presented. The computer-readable storage media has stored thereon: instructions executable by one or more processors of a computer system. As a result of execution of the instructions the computer system is caused to perform the method according to the aforementioned first aspect of the present technique. The advantages are as aforementioned with respect to the first aspect of the present technique.

In a fourth aspect of the present technique a computer program is presented. The computer program when being executed by one or more processors of a computer system performs the method according to the aforementioned first aspect of the present technique. The advantages are as aforementioned with respect to the first aspect of the present technique.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: depicts a flow chart of an exemplary embodiment of a method of the present technique;
- FIG 2: schematically represents an exemplary embodiment of a system of the present technique; and
- FIG 3: schematically represents a perspective view of an exemplary embodiment of a scene where an object is suspected to be present;
- FIG 4: schematically represents a top view of the exemplary embodiment of the scene of FIG 3;
- FIG 5: schematically represents an exemplary embodiment of a three dimensional model of the object to be detected and exemplary embodiments of two dimensional slices obtained from the three dimensional model of the object; and
- FIG 6: schematically represents an exemplary embodiment of a three dimensional scan of the scene of FIG 3 and exemplary embodiments of two dimensional slices obtained from the three dimensional scan of the scene, in accordance with aspects of the present technique.

Hereinafter, above-mentioned and other features of the present technique are described in details. Various embodiments are described with reference to the drawing, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", etc. are used herein only to facilitate discussion, and carry no particular temporal or chronological significance unless otherwise indicated.

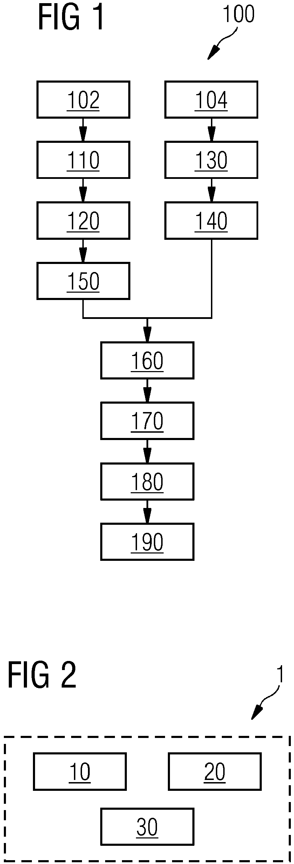

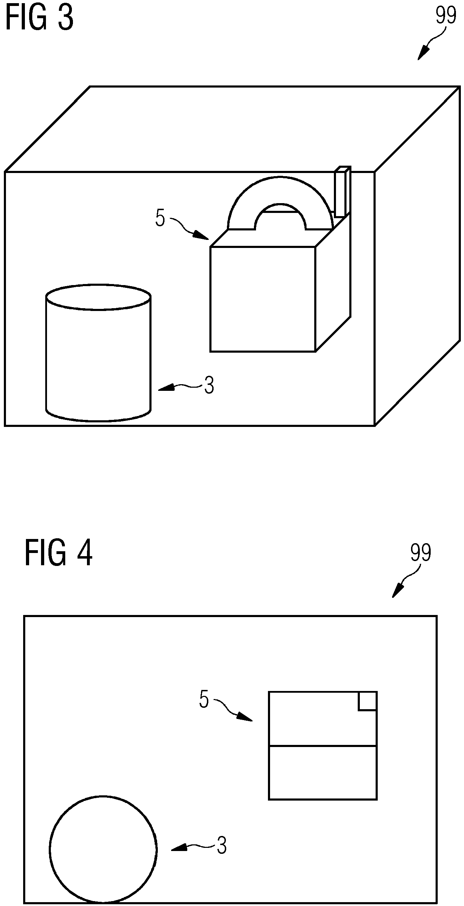

FIG 1 depicts a flow chart of an exemplary embodiment of a method 100 of the present technique and FIG 2 schematically represents an exemplary embodiment of a system 1 of the present technique. The method 100 and the system 1 have been described hereinafter with reference to FIGs 1 and 2 in combination with FIGs 3 to 6.

A scene 99 has been shown in FIG 3 and FIG 4 that schematically represent a perspective view and a top view of the scene 99, respectively. The scene 99 may be a factory, a real estate such as a room, a storage facility, etc. The scene 99 is a place where an object 5 that is to be detected is suspected to be present. The object 5 may be a machine, a unit of furniture, a stored article or a piece of equipment, and so on and so forth. The scene 99 may also includes one or more other articles 3 that is not required or desired to be detected, i.e. besides the object 5. The scene 99 is three dimensional and locations of the object 5 that is to be detected and of the article 3 that is not of interest are different within the scene 99.

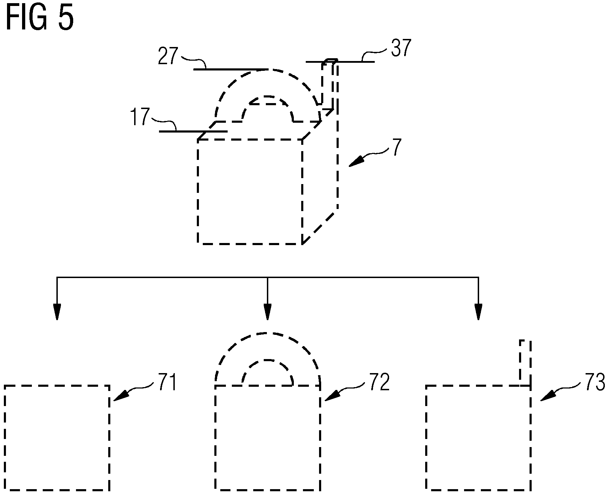

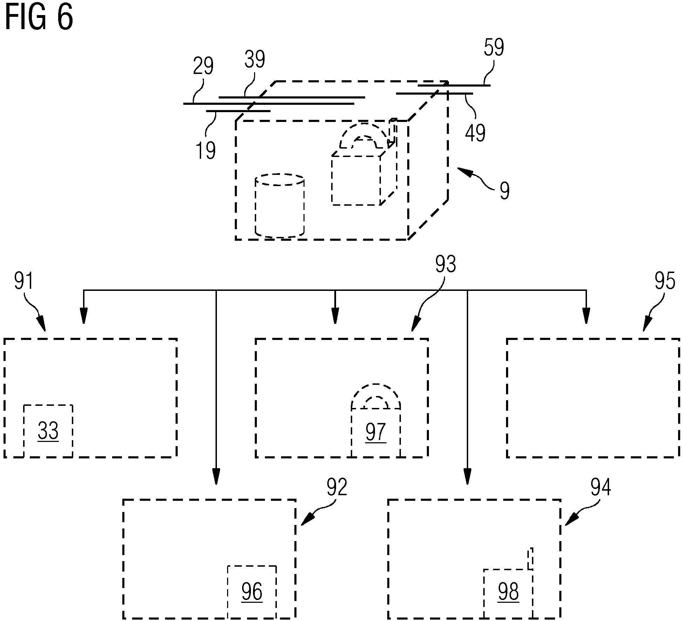

A three dimensional scan 9, as shown in FIG 6, of the scene 99 of FIG 3 is available, or is acquired by a step 104 of the method 100. The three dimensional scan 9, hereinafter also referred to as the 3D scan 9, may be generated by photogrammetry and/or by laser scanning. The objective of the present technique is to detect representation of presence of the object 5 in the 3D scan 9. As shown in FIG 5, a three dimensional model 7 of the object 5 is available, or is acquired by a step 102 of the method 100. The three dimensional model 7, hereinafter also referred to as the 3D model 7, may be generated by photogrammetry and/or by laser scanning. Furthermore the 3D model 7 may be a CAD (computer-aided design) model. The 3D model 7 represents a physical body, i.e. the object 5 to be detected, and the 3D scan 9 represents a physical space, i.e. the scene 99 in which the 3D model 7 is to be detected, by using a collection of points in 3D space, connected by various geometric entities such as triangles, lines, curved surfaces, etc. The surfaces of the 3D model 7 and the 3D scan 9 may be further defined with texture mapping. The techniques for generating 3D scans of such scenes 99, as well as for generating 3D models of objects 5 are well known are well known in the art of image processing and 3D modeling and thus not described herein in details for sake of brevity.

As shown in FIG 1 and in FIG 5, in the method 100, the 3D model 7 is sliced in a step 110 into a plurality of two dimensional slices 71,72,73. FIG 5 depicts three exemplary locations 17, 27, 37 at which the 3D model 7, hereinafter also referred to as the model 7, is sliced or segmented and thus generating three corresponding two dimensional (2D) slices 71, 72, 73, respectively. As is depicted in the slices 71, 72, 73 different aspects or features of the model 7 are included in different slices 71, 72, 73. Subsequently, in a step 120, each of the slices 71,72,73 of the model 7 of the object 5 are converted into an array of points. Thus in the example of FIG 5, three distinct array of points, one each for the slices 71,72,73 are generated. The array of points is a set of points in a two dimensional space that represents the aspects or features of the corresponding 2D slice 71,72,73.

In the method 100, after the step 120, in a step 150 a test slice 72 is selected from the plurality of two dimensional slices 71,72,73 of the model 7. The test slice 72 is selected based on a number of points in the corresponding arrays of the two dimensional slices 71,72,73 of the model 7 and/or based on a distribution of points in the corresponding arrays of the two dimensional slices 71,72,73 of the model 7.

To explain further, for the example of FIG 5, each of the three slices 71,72,73 will generate a corresponding array of points that will have a number of points and/or a distribution of points within the array that will reflect or be indicative of features of the model 7. For example the array corresponding to the slice 71 will be indicative of a rectangular front face of the object 5, the array corresponding to the slice 72 will be indicative of a rectangular cross-section of the object 5 and will additionally have indications of the distinctive arch shape on top of the rectangular cross-section, and the array corresponding to the slice 73 will be indicative of a rectangular cross-section of the object 5 and will additionally have indications of the distinctive rectangular protrusion on top of the rectangular cross-section. Thus one or more of the arrays so generated in the step 120 will differ from one or more of the other arrays of the plurality of arrays generated in the step 120. Thus by scanning or studying or evaluating or comparing each array with respect to the other arrays, the array having most distinctive or unique distribution of points and/or having a number of points greater than a threshold of number of points is determinable, and based on these parameters of the distribution of points and/or the number of points an array is selected as test array and the slice 71,72,73 corresponding to test array is thus determined to the test slice 72, for example. Alternatively or additionally, an array may be selected as the test array based on a set of rules decided by a user based on the application of the method 100 i.e. for example based on a shape of the object 5 to be detected, and the corresponding slice 71,72,73 is determined as the test slice 72 for example.

Independent of the steps 110, 120 and 150, and as shown in FIGs 1 and 6, in the method 100, the 3D scan 9 is sliced in a step 130 into a plurality of two dimensional slices 91,92,93,94,95. FIG 6 depicts five exemplary locations 19, 29, 39, 49, 59 at which the 3D scan 9, hereinafter also referred to as the scan 9, is sliced or segmented and thus generating five corresponding two dimensional (2D) slices 91, 92, 93, 94, 95 respectively. As is depicted in the slices 91, 92, 93, 94, 95 different aspects or features of the scan 9 are included in different slices 91, 92, 93, 94, 95. Subsequently, in a step 140, each of the slices 91, 92, 93, 94, 95 of the scan 9 of the scene 99 are converted into an array of points. Thus in the example of FIG 6, five distinct array of points, one each for the slices 91, 92, 93, 94, 95 are generated. The array of points is a set of points in a two dimensional space that represents the aspects or features of the corresponding 2D slice 91, 92, 93, 94, 95.

Thereafter in the method 100, i.e. after the steps 110, 120, 130, 140 and 150, in a step 160 at least a part of the array of points of the test slice 72 is compared to the two dimensional arrays of points of each of the slices 91,92,93,94,95 of the scan 9, by performing an array-in-array search. The part of the array of points of the test slice 72 that is compared in the step 160 may be a two dimensional array or a one dimensional array. Furthermore, the all the points of the array of the test slice 72 may be used for comparing in the step 160.

As a result of the array-in-array search, in the method 100, in a step 170 a match or equivalence or identity is found, if there exists one, between the part of the array corresponding to the test slice 72 and one of the arrays corresponding to the slices 91,92,93,94,95. The slice out of the slices 91,92,93,94,95 in which match or equivalence or identity is found is termed as the match slice.

To explain further, for the example of FIGs 5 and 6, and assuming the slice 72 to be the test slice, when the array corresponding to the test slice 72 is compared to each of the arrays corresponding to the slices 91,92,93,94,95, a match or equivalence or identity is found to be present in the array corresponding to the slice 93. This means that the array corresponding to the slice 93 has a portion or segment or part of the array that matches or is identical with the array corresponding to the part, so compared in the step 160, of the slice 72, which in turn means that the slice 93 has a part 97 that matches or is identical with a part or the whole of the test slice 72, and thus the slice 93 is termed as the match slice.

It may be noted that the match or identity is comparative, meaning thereby that the best match for array of slice 72 is selected to be the match slice i.e. slice 93 in the example of FIGs 5 and 6. As can be seen from the slices 92 and 94 of FIG 6, partial matches or identities for the test slice 72 are also present in the slices 92 and 94, for example the rectangular cross-section represented in the slices 92 and 94, however the maximum match or closest match or exact match for the array corresponding to the test slice 72 is present in the slice 93 and thus the slice 93 is selected to be the match slice. As shown in the example of FIGs 5 and 6, arrays corresponding to the slices 91 and 95 are indicative of the features or other aspects, for example representation 33 of the article 3 present in the scene 99 of FIG 3 but devoid of points that are identical to or a match for the array corresponding to the test slice 72.

In the method 100, after the match slice 92 is selected in the step 170, in a step 180 the slice adjacent to the test slice 72 is selected and is referred to as the adjacent slice. The adjacent slice is one of the slices that immediately precedes in position and that immediately succeeds in position, with reference to an order in the plurality of the slices 71,72,73 generated in the step 110. In the method 100, either both the slices that immediately precedes in position and that immediately succeeds in position are used or one of the slices that immediately precedes in position or that immediately succeeds in position is selected. When one of the slices that immediately precedes in position or that immediately succeeds in position is selected to be the adjacent slice, the selection may be based in same way as for selecting the test slice 72 in the step 150, i.e. based on a number of points or a distribution of points in the arrays of the slices immediately preceding or succeeding in position is selected to be the adjacent slice. In example of FIG 5, the slice 73 is selected to be the adjacent slice 73 owing to the distinctive feature of projection or protrusion from the rectangular cross-section present in the slice 73.

In the method 100, after the step 180, in a step 190 at least a part of the array of points of the adjacent slice 73 is compared to the array of points of a neighbouring slice 94, with respect to the match slice 93 by an array-in-array search. The neighbouring slice 94 is the slice that bears the same relation to the match slice 93, i.e. either immediately preceding or succeeding in position with respect to the match slice 93, that the adjacent slice 73 bears with the test slice 72.

In the method 100, the model 7 of the object 5 is determined as detected in the scan 9 if a match, i.e. equivalence or identity, for the part of the array of points of the adjacent slice 73, so compared in the step 190, is established in the neighbouring slice 94 of the scan 9.

Alternatively, the method 100 may include repetition of the steps 180 and 190 after a match i.e. equivalence or identity, for the part of the array of points of the adjacent slice 73, so compared in the step 190, is established in the neighbouring slice 94 of the scan 9. In this embodiment of the method 100, a next adjacent slice is selected, with respect to the adjacent slice 73 and which is not the test slice 72, from the plurality of two dimensional slices 71,72,73 of the model 7 of the object 5. At least a part of the array of points of the next adjacent slice is then compared to the array of points of a next neighbouring slice, with respect to the neighbouring slice 94, of the three dimensional scan 9, by an array-in-array search. Thereafter, the model 7 of the object 5 is determined as detected in the three dimensional scan 9 if a match for the part of the array of points of the next adjacent slice, so compared, is established in the next neighbouring slice of the three dimensional scan 9.

As shown in FIG 2, the system 1 for detecting the model 7 of in the scan 9 includes a scanning device 20, for example a laser scanner or a camera, that provides the scan 9, as described in the aforementioned step 104, and/or that provides the model 7 of the object 5 as described in the aforementioned step 102. The system 1 also includes a processor 10 that performs the steps 110, 120, 130, 140, 150, 160, 170, 180 and 190 as aforementioned with respect to FIG 1. The processor 10 determines the model 7 of the object 5 as detected or identified in the scan 9 if a match for the part of the array of points of the adjacent slice 73, so compared, is established in the neighbouring slice 94 of the scan 9. The processor 10 has an interface to receive the model 7 and the scan 9 from the scanning device 20. Alternatively, the processor 10 has an interface to receive raw data, for example laser scan data or photographs, and then construct the model 7 and/or the scan 9. The system 1 may further include a memory 30 that stores the model 7 and/or the scan 9 or the raw data, for example laser scan data or photographs, from the scanning device 10.

In another aspect of the present technique, a computer-readable storage media is presented. The storage media has stored thereon: instructions executable by one or more processors 10 of a computer system. As a result of the execution of the instructions, so stored, the computer system is caused to perform the method 100 described hereinabove with reference to FIGs 1 to 6. In yet another aspect of the present technique, a computer program, is presented. The computer program when being executed by one or more processors 10 of a computer system performs the method 100 described hereinabove with reference to FIGs 1 to 6.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method (100) for detecting a three dimensional model (7) of an object (5) in a three dimensional scan (9) suspected to include the model (7) of the object (5), the method (100) comprising:
- slicing (110) the model (7) of the object (5) into a plurality of two dimensional slices (71,72,73);
- converting (120) each of the slices (71,72,73) of the model (7) of the object (5) into an array of points;
- slicing (130) the three dimensional scan (9) into a plurality of two dimensional slices (91,92,93,94,95);
- converting (140) each of the slices (91,92,93,94,95) of the three dimensional scan (9) into an array of points;
- selecting (150) a test slice (72) from the plurality of two dimensional slices (71,72,73) of the model (7) of the object (5) ;
- comparing (160) at least a part of the array of points of the test slice (72) to the two dimensional arrays of points of each of the slices (91, 92, 93, 94, 95) of the three dimensional scan (9), by an array-in-array search;
- selecting (170) a match slice (93) from the slices (91,92,93,94,95) of the three dimensional scan (9), wherein the match slice (93) is selected based on a match for the part of the array of points, so compared, of the test slice (72) within the array of points of one of the slices (91, 92, 93, 94, 95) of the three dimensional scan (9);
- selecting (180) an adjacent slice (73), with respect to the test slice (72), from the plurality of two dimensional slices (71,72,73) of the model (7) of the object (5); and
- comparing (190) at least a part of the array of points of the adjacent slice (73) to the array of points of a neighbouring slice (94), with respect to the match slice (93), of the three dimensional scan (9), by an array-in-array search;
wherein the model (7) of the object (5) is determined as detected in the three dimensional scan (9) if a match for the part of the array of points of the adjacent slice (73), so compared, is established in the neighbouring slice (94) of the three dimensional scan (9).

2. The method (100) according to claim 1, wherein the part of the array of points of the test slice (72) is a two dimensional array.

3. The method (100) according to claim 1 or 2, wherein the part of the array of points of the test slice (72) comprises all points of the array of points of the test slice (72).

4. The method (100) according to claim 1, wherein the part of the array of points of the test slice (72) is a one dimensional array.

5. The method (100) according to any of claims 1 to 4, wherein in selecting (150) the test slice (72) from the plurality of two dimensional slices (71,72,73) of the model (7) of the object (5), the test slice (72) is selected based on a number of points in the corresponding arrays of the two dimensional slices (71,72,73) of the model (7) of the object (5).

6. The method (100) according to any of claims 1 to 5, wherein in selecting (150) the test slice (72) from the plurality of two dimensional slices (71,72,73) of the model (7) of the object (5), the test slice (72) is selected based on a distribution of points in the corresponding arrays of the two dimensional slices (71,72,73) of the model (7) of the object (5).

7. The method (100) according to any of claims 1 to 6, wherein the model (7) of the object (5) is one of a laser scan and a photogrammetric scan.

8. The method (100) according to any of claims 1 to 6, wherein the model (7) of the object (5) is a CAD model.

9. The method (100) according to any of claims 1 to 8, wherein three dimensional scan (9) is one of a laser scan and a photogrammetric scan.

10. The method (100) according to any of claims 1 to 9, comprising acquiring (102) the model (7) of the object (5).

11. The method (100) according to any of claims 1 to 10, further comprising acquiring (104) the three dimensional scan (9).

12. A system (1) for detecting a three dimensional model (7) of an object (5) in a three dimensional scan (9) suspected to include the model (7) of the object (5), the system (1) comprising:
- a scanning device (20) adapted to provide the three dimensional scan (9) suspected to include the model (7) of the object (5) and/or to provide the three dimensional model (7) of the object (5) to be detected; and
- a processor (10) adapted to:
- slice the model (7) of the object (5) into a plurality of two dimensional slices (71,72,73);
- convert each of the slices (71,72,73) of the model (7) of the object (5) into an array of points;
- slice the three dimensional scan (9) into a plurality of two dimensional slices (91,92,93,94,95);
- convert each of the slices (91, 92, 93, 94, 95) of the three dimensional scan (9) into an array of points;
- select a test slice (72) from the plurality of two dimensional slices (71,72,73) of the model (7) of the object (5) ;
- compare at least a part of the array of points of the test slice (72) to the two dimensional arrays of points of each of the slices (91,92,93,94,95) of the three dimensional scan (9), by an array-in-array search;
- select a match slice (93) from the slices (91,92,93,94,95) of the three dimensional scan (9), wherein the match slice (93) is selected based on a match for the part of the array of points, so compared, of the test slice (72) within the array of points of one of the slices (91, 92, 93, 94, 95) of the three dimensional scan (9);
- select an adjacent slice (73), with respect to the test slice (72), from the plurality of two dimensional slices (71,72,73) of the model (7) of the object (5);
- compare at least a part of the array of points of the adjacent slice (73) to the array of points of a neighbouring slice (94), with respect to the match slice (93), of the three dimensional scan (9), by an array-in-array search; and
- determine the model (7) of the object (5) as detected in the three dimensional scan (9) if a match for the part of the array of points of the adjacent slice (73), so compared, is established in the neighbouring slice (94) of the three dimensional scan (9).

13. The system (1) according to claim 12, wherein the processor (10) is further adapted to select the test slice (72) based on a number of points in the corresponding arrays of the two dimensional slices (71,72,73) of the model (7) of the object (5) and/or a distribution of points in the corresponding arrays of the two dimensional slices (71,72,73) of the model (7) of the object (5).

14. A computer-readable storage media having stored thereon: instructions executable by one or more processors (10) of a computer system, wherein execution of the instructions causes the computer system to perform the method (100) according to any one of the claims 1 to 11.

15. A computer program, which is being executed by one or more processors (10) of a computer system and performs the method (100) according to any one of the claims 1 to 11.
